# EUROPEAN PATENT APPLICATION

(11) **EP 1 229 601 A1**
(43) Date of publication of application: **07.08.2002**
(21) Application number: 00946413.2
(22) Date of filing: 19.07.2000
(51) Int. Cl.: H01M 8/02, H01M 8/10

(54) **SOLID POLYMER ELECTROLYTE TYPE FUEL CELL AND METHOD FOR MANUFACTURING THE SAME**

(30) Priority: 21.07.1999 JP 20678499
(71) Applicant: ASAHI GLASS COMPANY LTD., Tokyo 100-8405 (JP)
(72) Inventor: HIGUCHI, Yoshiaki Asahi Glass Company Limited, Yokohama-shi Kanagawa 221-8755 (JP); TERADA, Ichiro Asahi Glass Company Limited, Yokohama-shi Kanagawa 221-8755 (JP); SHIMOHIRA, Tetsuji Asahi Glass Company Limited, Yokohama-shi Kanagawa 221-8755 (JP); HOMMURA, Satoru Asahi Glass Company Limited, Yokohama-shi Kanagawa 221-8755 (JP)
(74) Representative: Müller-Boré & Partner Patentanwälte
(86) International application number: JP0004853
(87) International publication number: WO0106587

(57) **Abstract**

A solid polymer electrolyte fuel cell having a cation exchange membrane made of a perfluorocarbon polymer having sulfonic acid groups as an electrolyte, wherein the cation exchange membrane has been stretched and has a larger surface area, preferably a 5-100% larger surface area, than it had before the stretching. According to the above, because the cation exchange membrane does not elongate or wrinkle even under great change in humidity, it is possible to provide a solid polymer electrolyte fuel cell which has a high power output and excellent durability.

## Description

### BACKGROUND OF THE INVENTION

### TECHNICAL FIELD

The present invention relates to a solid polymer electrolyte fuel cell and a method of its production.

### BACKGROUND ART

Studies on solid polymer electrolyte fuel cells using proton-permeable polymer membranes as electrolytes have progressed in recent years. Solid polymer electrolyte fuel cells are characterized by their moderate working temperature, high power density and availability in small size and are promising as an automotive power supply.

As electrolytes for solid polymer electrolyte fuel cells, proton-permeable ion exchange membranes of 20 to 200 µm thick are usually used, and especially cation exchange membranes made of perfluorocarbon polymers having sulfonic acid groups are extensively studied for their excellent basic properties.

The electric resistance of such cation exchange membranes can be reduced by increasing the sulfonic acid group density or reducing membrane thickness. However, remarkable increase in sulfonic acid group density leads to deterioration of the mechanical strength of membranes or makes membranes vulnerable to creeping during long operation of fuel cells, and as a result, the durability of fuel cells deteriorates problematically. On the other hand, thinner membranes have lower mechanical strength, and as a result, they are problematically difficult to process or handle when attached to gas diffusion electrodes.

As a solution to the above-mentioned problems, a composite ion exchange membrane consisting of a film made of a perfluorocarbon polymer having sulfonic acid groups and a porous polytetrafluoroethylene (hereinafter referred to as PTFE) (Mark W. Barbludge, AIChE Journal, 38, 93 (1992)) was proposed. Although this approach can provide a thinner membrane, the electric resistance of the membrane is not low enough because of the inclusion of the porous PTFE.

The present inventors repeatedly investigated the properties of cation exchange membranes necessary for their application in fuel cells and found out that a membrane elongates and forms wrinkled slack along the inside of the gasket of a fuel cell due to the change of water content in the membrane during cell operation, and that the slack suffers mechanical damage during continuous operation of the fuel cell.

### DISCLOSURE OF THE INVENTION

The object of the present invention is to provide a solid polymer electrolyte fuel cell with high power density and good durability having, as a solid polymer electrolyte, a cation exchange membrane which has planar dimensional stability against change of water content and hardly elongates.

The present invention provides a solid polymer electrolyte fuel cell having a cation exchange membrane made of a perfluorocarbon polymer having sulfonic acid groups as an electrolyte, wherein the cation exchange membrane has been stretched and has a larger surface area than it had before the stretching.

The present invention also provides a method of producing a solid polymer electrolyte fuel cell having a cation exchange membrane made of a perfluorocarbon polymer having sulfonic acid groups as an electrolyte and gas diffusion electrodes on both sides of the electrolyte, which comprising stretching a membrane made of a perfluorocarbon polymer having sulfonic acid groups to increase the surface area from the original surface area and placing gas diffusion electrodes on both sides of the membrane to use the membrane as the cation exchange membrane.

### BEST MODE FOR CARRYING OUT THE INVENTION

In the present invention, stretching means a treatment made in any steps in the production process such as molding, chemical treatment and drying, in which external force is applied to a membrane to increase the surface area from the original surface area it had before the application of the physical external force. Specifically, uniaxial stretching in which a membrane is passed between two rollers rotating at different speeds to stretch the membrane in one direction, and biaxial stretching which uses mechanical clips to stretch a membrane in two directions simultaneously, may be mentioned. A cation exchange membrane having a high water content shrinks in area upon drying. Therefore, when such a membrane is dried with its periphery fixed, the surface area increases as compared with when it is dried with its periphery kept free. Herein, such a treatment also falls within the definition of stretching.

The stretching of a membrane in the present invention is preferably uniaxial or biaxial, particularly biaxial, in view of the planar dimensional stability of the membrane. In the case of biaxial stretching, it is preferred to stretch a membrane with backing films for stretching having excellent extensibility laid on both sides of the membrane because the membrane surface area is readily increased without breakage. As backing films for stretching, polyethylene terephthalate films and the like are preferably used. In the present invention, it is preferred to make the surface area from 5 to 100% larger by stretching than it had before the application of external force. The preferable increase in surface area depends on the condition and temperature of the membrane during the stretching.

It is preferred that the increase in surface area by stretching is large in order to improve the dimensional stability of a cation exchange membrane for use in a unit fuel cell, and a maximum increase of about 200% is possible. However, too large an increase puts the membrane under constant tensile stress and is likely to result in deterioration of membrane strength. If the increase in surface area is less than 5%, sufficient improvement in dimensional stability may not be attained by stretching.

As the perfluorocarbon polymer having sulfonic acid groups which constitutes the cation exchange membrane in the present invention, a wide variety of known polymers may be used. Perfluorocarbon polymers having sulfonic acid groups are obtained from precursor resins having terminal SO₂F groups (hereinafter referred to simply as precursors) by hydrolysis and conversion into the acid forms. The perfluorocarbon polymer in the present invention may contain oxygen atoms forming ether linkages.

As the above-mentioned precursors, copolymers comprising polymerization units derived from a fluorovinyl compound represented by CF₂=CF-(OCF₂CFX)ₘ-Oₚ-(CF₂)ₙ-SO₂F (wherein X is a fluorine atom or a trifluoromethyl group, m is an integer of from 0 to 3, n is an integer of from 1 to 12, p is 0 or 1, and m+n ≧ 1 provided that when n=0, p=0) and polymerization units derived from a perfluoroolefin such as tetrafluoroethylene or hexafluoropropylene, chlorotrifluoroethylene or perfluoro(alkyl vinyl ether) are preferred.

Particularly preferred are copolymers comprising polymerization units derived from the above-mentioned fluorovinyl compound and polymerization units derived from tetrafluoroethylene. Preferable examples of the above-mentioned fluorovinyl compound include the following compounds. In the following formulae, q is an integer of from 1 to 8, r is an integer of from 1 to 8, s is an integer of from 1 to 8, and t is an integer of from 1 to 5.

CF₂=CFO(CF₂)_{q}SO₂F

CF₂=CFOCF₂CF(CF₃)O(CF₂)ᵣSO₂F

CF₂=CF(CF₂)ₛSO₂F

CF₂=CF(OCF₂CF(CF₃))ₜO(CF₂)₂SO₂F

In the present invention, the sulfonic acid group density, i.e. the ion exchange capacity, of the perfluorocarbon polymer having sulfonic acid groups is preferably from 0.5 to 2.0 meq/g dry resin, especially from 0.7 to 1.6 meq/g dry resin. If the ion exchange capacity is below this range, the electric resistance of the membrane tends to be large, while if the ion exchange capacity is above this range, the mechanical strength of the membrane tends to be low.

The cation exchange membrane in the present invention is made of a perfluorocarbon polymer having sulfonic acid groups and may contain a reinforcement in the form of fibrils, woven fabric or nonwoven fabric in addition to the polymer. Incorporation of a reinforcement improves the strength of the cation exchange membrane on the whole. A membrane containing a reinforcement remarkably improves in dimensional stability upon stretching. Therefore, such a cation exchange membrane is preferable for use as an electrolyte membrane in fuel cells because the wrinkle resistance of such a membrane keeps a fuel cell performing well consistently during a long time operation.

If present, the reinforcement is preferably made of a fluorine-containing polymer. A homopolymer or copolymer comprising polymerization units derived from tetrafluoroethylene, hexafluoropropylene, chlorotrifluoroethylene or perfluoro(alkyl vinyl ether) may be used preferably.

Specifically, a polytetrafluoroethylene (hereinafter referred to as PTFE), a tetrafluoroethylene/hexafluoropropylene copolymer (hereinafter referred to as FEP), a tetrafluoroethylene/perfluoro(propyl vinyl ether) copolymer (hereinafter referred to as PFA), a tetrafluoroethylene/ethylene copolymer (hereinafter referred to PETFE), a polychlorotrifluoroethylene, a tetrafluoroethylene/perfluoro(2,2-dimethyl-1,3-dioxol) copolymer, a polyperfluoro(butenyl vinyl ether) and the like may be mentioned. Especially, a PTFE, a FEP, a PFA or a PETFE is preferable in view of mechanical strength and chemical stability.

The fluorine-containing polymer has preferably the form of fibrils, a woven fabric or a nonwoven fabric in the cation exchange membrane and serves as a reinforcement. The fluorine-containing polymer in the form of fibrils, a woven fabric or a nonwoven fabric can be incorporated in the cation exchange membrane at any arbitrary ratio, unlike a porous PTFE, and can provide a reinforced membrane with excellent dimensional stability. Besides, a woven or nonwoven fabric has high reinforcing effect even if the opening ratio is high, and therefore reinforcement is attained without increasing electric resistance.

The amount of the reinforcement made of a fluorine-containing polymer in the form of fibrils, a woven fabric or a nonwoven fabric, if present in the cation exchange membrane, is preferably from 0.1 to 50 mass%, in particular, form 0.5 to 40 mass%. More than 50 mass% of a reinforcement can lead to increase in membrane resistance, while less than 0.1 mass% of a reinforcement can hardly have reinforcing effect.

The reinforcement may be incorporated in the cation exchange membrane by any method without any special restriction, for example, through a casting technique by drying a solution or dispersion of a perfluorocarbon polymer having sulfonic acid groups infiltrated into a reinforcement in the form of a sheet (a woven fabric or a nonwoven fabric) to form a film, or by thermally processing a film of a perfluorocarbon polymer having sulfonyl fluoride groups and a reinforcement in the form of a sheet by plate pressing, vacuum pressing or continuous roll pressing. It is also possible to incorporate a PTFE in the form of fibrils into a cation exchange membrane by extruding a mixture of a perfluorocarbon polymer having sulfonyl fluoride groups and a PTFE fine powder into film.

The cation exchange membrane containing a reinforcement in the present invention is obtained by stretching a membrane formed from a perfluorocarbon polymer having sulfonic acid groups and a reinforcement as described above. Molding of a cation exchange membrane can be achieved simultaneously with increase in surface area if treatment such as pressing is done during molding. However, the stretching in the present invention is an operation which requires exertion of external force to a molded film to increase the surface area and does not include such treatment during molding.

In the present invention, gas diffusion electrodes are bonded to both sides of a stretched cation exchange membrane by a well-known method, and, further, current collectors are put on the electrodes to assemble a solid polymer electrolyte fuel cell.

In general, the gas diffusion electrodes are preferably porous sheets obtained by bonding an electrically conductive carbon black powder carrying a particulate platinum catalyst or a particulate platinum alloy catalyst with a hydrophobic resin binder such as PTFE. The porous sheets may contain a perfluorocarbon polymer having sulfonic acid groups such as those mentioned as preferred examples of the perfluorocarbon polymer constituting the cation exchange membrane. It is even more desirable that the carbon black powder is coated with the above-mentioned perfluorocarbon polymer.

It is preferred to bond the gas diffusion electrodes to the cation exchange membrane by heat pressing. As the current collectors to be put on the gas diffusion electrodes, electrically conductive carbon black sheets having fuel gas or oxidizing gas channels are preferable.

Now, the present invention is described in further detail with reference to Examples and Comparative Examples. However, the present invention is by no means restricted thereto.

### [EXAMPLE 1 (Example and Comparative Example)]

### [Preparation of cation exchange membranes]

A 10 1 stainles steel autoclave was loaded with 3.09 kg of 1,1,2-trichloro-1,2,2-trifluoroethane and 13.5 g of α,α'-azobisisobutyronitrile and then with 4.41 kg of CF₂=CFOCF₂CF(CF₃)O(CF₂)₂SO₂F. After sufficient deaeration, the temperature was elevated to 70°C, and the inner pressure was raised to 12.4 kg/cm² by supplying tetrafluoroethylene to initiate the polymerization. The supply of tetrafluoroethylene was continued to compensate the pressure loss accompanying the progress of the polymerization. When the reaction was stopped 7.0 hours later, a copolymer comprising polymerization units derived from CF₂=CFOCF₂CF (CF₃)O(CF₂)₂SO₂F and polymerization units derived from tetrafluoroethylene having an ion exchange capacity of 1.1 meq/g dry resin was obtained. The copolymer was extruded at 220°C into a film of 50 µm thick.

The film was hydrolyzed in an aqueous solution containing 30 mass% of dimethyl sulfoxide and mass% of potassium hydroxide washed with water and soaked in 1 N of hydrochloric acid at 25°C for 24 hours to give a membrane.

The membrane was thoroughly washed with water and dried in a drying chamber at a temperature of 90°C and a relative humidity of at most 10% with its periphery mechanically fixed, and the resulting membrane was used as a cation exchange membrane of Example. The same procedure as mentioned above was followed except that the membrane was dried with the periphery kept free after it was washed with water to give a cation exchange membrane of Comparative Example.

The surface area of the cation exchange membrane of Example was larger by 32% than the cation exchange membrane of Comparative Example.

### [High temperature and high humidity storage test]

The cation exchange membranes of Example and Comparative Example were maintained in an atmosphere at 80°C at 95% RH for 24 hours with their peripheries fixed. The cation exchange membranes of Example did not elongate or wrinkle, while the cation exchange membrane of Comparative Example elongated and formed a lot of wrinkles all over the surface.

### [Assembly of fuel cells and performance evaluation]

A coating solution containing a copolymer consisting of polymerization units derived from tetrafluoroethylene and polymerization units derived from CF₂=CFOCF₂CF(CF₃)O(CF₂)₂SO₃H (with an ion exchange capacity of 1.1 meq/g dry resin) and platinum-loaded carbon in a ration of 1:3 in ethanol as the solvent was applied to carbon cloth by die coating and dried to form gas diffusion electrodes of 10 µm thick carrying 0.5 mg /cm² of platinum. The membrane of Example was sandwiched between two of the gas diffusion electrodes and pressed with a plate press to form a membrane-electrode assembly.

On the membrane-electrode assembly, current collectors made of titanium, and then gas supply chambers made of PTFE and heaters were disposed successively to assemble a fuel cell having an effective membrane area of 9 cm².

Similarly, a fuel cell using the membrane of Comparative Example was assembled.

Oxygen was supplied to the cathode, and hydrogen was supplied to the anode, respectively, under a pressure of 0.2 MPa, while the fuel cell temperature was maintained at 80°C. The terminal voltages of the fuel cells using the membrane of Example and Comparative Example measured at a current density of 1 A/cm² were both 0.57 V.

After 1000 hours of continuous operation at 80°C at a current density of 1 A/cm², the terminal voltage of the fuel cell using the membrane of Example was 0.56 V.

In contrast, after 1000 hours of operation, the terminal voltage of the fuel cell using the membrane of Comparative Example was down to 0.3 V, and the fuel cell was dismantled to find out more wrinkles on the peripheries of the electrodes formed due to elongation of the membrane than before the operation.

### [EXAMPLE 2 (Example)]

A membrane of 50 µm thick was prepared in the same manner as the cation exchange membrane of Comparative Example in Example 1. The membrane was sandwiched between two amorphous polyethylene terephthalate films of 200 µm thick as backing films for stretching and pressed between heat rolls at 80°C to obtain a laminated membrane having the backing films for stretching on both sides.

The laminated membrane was stretched biaxially at stretch ratios of 1.3 in both directions (the direction parallel to the movement through the single screw extruder (the MD direction) and the direction perpendicular to the MD direction (the TD direction)) to form a cation exchange membrane of 30 µm thick having a surface area increased by 70%.

A fuel cell was assembled in the same manner as in Example 1 except for the use of the above-mentioned ion exchange membrane as the electrolyte membrane and evaluated. The terminal voltage at a current density of 1 A/cm² was 0.60 V. The terminal voltage remained unchanged at 0.59 V after 1000 hours of continuous operation at 1 A/cm².

### [Example 3 (Example)]

A cation exchange membrane of 25 µm was prepared in the same manner as in Example 2 except that the biaxial stretch ratios in both directions were changed to 1.4 to give a surface area increase of 96%.

A fuel cell was assembled in the same manner as in Example 1 except for the use of the above-mentioned ion exchange membrane as the electrolyte membrane and evaluated. The terminal voltage at a current density of 1 A/cm² was 0.60 V. The terminal voltage remained unchanged at 0.58 V after 1000 hours of continuous operation at 1 A/cm².

### [Example 4 (Example 4)]

9730 g of a powdery copolymer consisting of polymerization units derived from tetrafluoroethylene and polymerization units derived from CF₂=CF-OCF₂CF(CF₃)O(CF₂)₂SO₂F (with an ion exchange capacity of 1.1 meq/g dry resin) and 270 g of a PTFE powder (product name: Fluron CD-1, manufactured by Asahi Glass Company, Limited) were mixed and extruded with a twin screw extruder to give 9500 g of pellets. The pellets were molded into a film of 200 µm thick through a single screw extruder. The film was smoothed through a heat roll press at 220°C, then sandwiched between two amorphous polyethylene terephthalate films of 200 µm thick as backing films for stretching and pressed between heat rolls at 80°C to give a laminated membrane having the backing films for stretching on both sides.

The laminated membrane was stretched biaxially at 85°C at stretch ratios of 2 in both directions (the direction parallel to the movement through the single screw extruder (the MD direction) and the direction perpendicular to the MD direction (the TD direction)) to form a cation exchange membrane of 50 µm thick (having a surface area increased by 300%). The resulting membrane was heat-treated with a heat roll press at 180°C with the backing films on both sides, then the backing films were peeled off, and the membrane was hydrolyzed in an aqueous solution containing dimethyl sulfoxide and potassium hydroxide, converted into the acid form with hydrochloric acid, washed and dried to give a film of 50 µm thick made of perfluorocarbon polymer having sulfonic acid groups.

The film was sandwiched between amorphous polyethylene terephthalate films of 200 µm thick as backing films for stretching and thermally laminated in the same manner as mentioned above and stretched biaxially at 85°C at stretch ratios of 1.3 in both directions (with a surface area increase of 70%), and peeled off the backing films to give a cation exchange membrane of 30 µm thick. The cation exchange membrane contained fibrils of PTFE as a reinforcement.

A fuel cell was assembled in the same manner as in Example 1 except for the use of the above-mentioned ion exchange membrane as the electrolyte membrane and evaluated. The terminal voltage at a current density of 1 A/cm² was 0.61 V. The terminal voltage remained unchanged at 0.60 V after 1000 hours of continuous operation at 1 A/cm².

### [EXAMPLE 5 (Comparative Example)]

The pellets obtained in Example 4 were extruded with a single screw extruder into a film of 150 µm thick. The film was hydrolyzed in an aqueous solution containing dimethyl sulfoxide and potassium hydroxide, converted into the acid form with hydrochloric acid, washed and dried to give a cation exchange membrane having a 150 µm thickness. A fuel cell was assembled in the same manner as in Example 1 except that the cation exchange membrane was used as the electrolyte membrane without any processing to increase the surface area. The terminal voltage at a current density of 1 A/cm² was 0.50 V. The terminal voltage was down to 0.42 V after 1000 hours of continuous operation at 1 A/cm². The fuel cell was dismantled to find out many wrinkles on the peripheries of the electrodes formed due to elongation of the membrane.

### INDUSTRIAL APPLICABILITY

When used as an electrolyte membrane in a fuel cell, the cation exchange membrane of the present invention does not induce power reduction of the fuel cell unlike conventional membranes and has such excellent dimensional stability that it never wrinkles due to elongation under great change in humidity. Therefore, the solid polymer electrolyte fuel cell of the present invention which comprises the cation exchange membrane as the solid polymer electrolyte has a high power output and excellent durability.

## Claims

1. A solid polymer electrolyte fuel cell having a cation exchange membrane made of a perfluorocarbon polymer having sulfonic acid groups as an electrolyte, wherein the cation exchange membrane has been stretched and has a larger surface area than it had before the stretching.

2. The solid polymer electrolyte fuel cell according to Claim 1, wherein the cation exchange membrane has a surface area which is 5 to 100% larger than it had before the stretching.

3. The solid polymer electrolyte fuel cell according to Claim 1 or 2, wherein the cation exchange membrane has been stretched by drying the cation exchange membrane at a high water content while fixing the periphery of the membrane.

4. The solid polymer electrolyte fuel cell according to Claim 1 or 2, wherein the cation exchange membrane has been stretched biaxially.

5. The solid polymer electrolyte fuel cell according to Claim 1, 2, 3 or 4, wherein the perfluorocarbon polymer is a copolymer comprising polymerization units derived from CF₂=CF₂ and polymerization units derived from CF₂=CF-(OCF₂CFX)ₘ-Oₚ-(CF₂)ₙ-SO₃H (wherein X is a fluorine atom or a trifluoromethyl group, m is an integer of from 0 to 3, n is an integer of from 0 to 12, and p is 0 or 1, provided that when n=0, p=0).

6. The solid polymer electrolyte fuel cell according to Claim 1, 2, 3, 4 or 5, wherein the cation exchange membrane contains from 0.1 to 50 mass% of fibrils, a woven fabric or a nonwoven fabric made of a fluorine-containing polymer.

7. A method of producing a solid polymer electrolyte fuel cell having a cation exchange membrane made of a perfluorocarbon polymer having sulfonic acid groups as an electrolyte and gas diffusion electrodes on both sides of the electrolyte, which comprising stretching a membrane made of a perfluorocarbon polymer having sulfonic acid groups to increase the surface area from the original surface area and placing gas diffusion electrodes on both sides of the membrane to use the membrane as the cation exchange membrane.

8. The method of producing a solid polymer electrolyte fuel cell according to Claim 7, wherein the surface area of the membrane is increased by 5 to 100% by stretching.

9. The method of producing a solid polymer electrolyte fuel cell according to Claim 7 or 8, wherein the membrane is stretched biaxially.

10. The method of producing a solid polymer electrolyte fuel cell according to Claim 9, wherein the membrane is stretched biaxially after extensible films are placed on both sides of the membrane.
